# EUROPEAN PATENT SPECIFICATION

(11) **EP 4 447 251 B1**
(45) Date of publication and mention of the grant of the patent: **15.10.2025**
(21) Application number: 23167355.9
(22) Date of filing: 11.04.2023
(51) Int. Cl.: H02J 3/32, H02J 3/38, H02J 3/46

(54) **POWER CONTROL SYSTEM FOR POWER NETWORK**
LEISTUNGSSTEUERUNGSSYSTEM FÜR EIN STROMNETZ
SYSTÈME DE COMMANDE DE PUISSANCE POUR RÉSEAU ÉLECTRIQUE

(43) Date of publication of application: 16.10.2024
(73) Proprietor: Hitachi Energy Ltd, 8050 Zürich (CH)
(72) Inventor: ANDERSSON, Mats, Beijing, 100125 (CN); LU, Jingwei, Beijing, 100081 (CN)
(74) Representative: Zacco Sweden AB

(56) References cited:
- US-A1- 2005 015 182
- US-A1- 2010 171 472

## Description

### TECHNICAL FIELD

The present disclosure generally relates to power network intended for power transmission. More particularly, it relates to a power control system for handing power imbalance in a power network.

### BACKGROUND

In general, renewable energy plays a major role in moving towards a carbon-neutral energy system. Renewable energy based power transmission requires changes in how power is transmitted and distributed to have a dynamic, flexible, and stable power network/power grid. An Alternating Current, AC, Chopper can be deployed to deal with unbalancing of power in case of consumer/transmission line trips in the power network/power grid. In case of trips, excessive active power could be generated thereby rapidly increasing AC frequency. During such scenarios, the AC Chopper is used to temporarily consume the excessive active power, thereby buying time for associated generator to ramp down total power generation. Ramping down the total generation regains a balance between generated and consumed active power, thereby leading to a normal AC frequency.

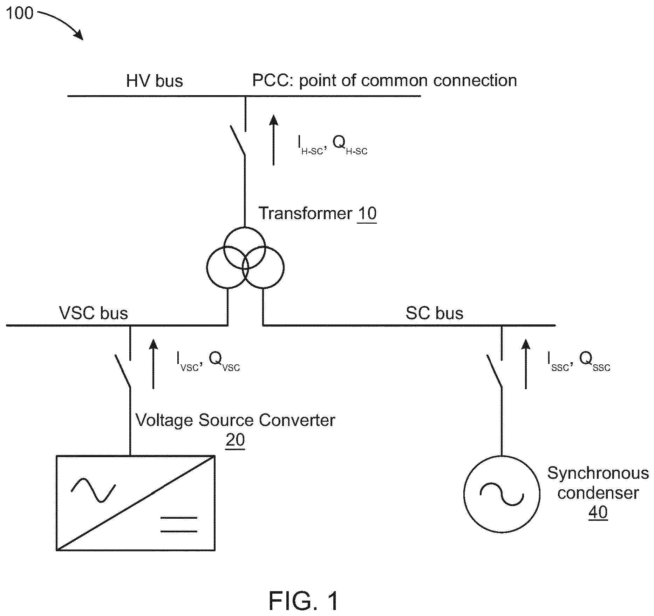

Webinar document titled "Introduction to ABB Synchronous Condenser offering", Christian Payerl, ABB Motors and Generators, 2020-12-16, retrieved from the Internet - "https://library.e.abb.com/public/1fb2ec9aleb34241924f030f47048951/Syncon_webinar __2020_Dec_presented_2020DEC.pdf", describes a power control system as a solution to improve grid strength. The power control system disclosed in the webinar document is depicted in Fig 1. As depicted in Fig. 1, the power control system 100 comprises a STATCOM (i.e., VSC) 20, and a Synchronous Condenser, SC, 40. The STATCOM 20 and the SC 40 are integrated on a single transformer 10 to handle power imbalance in the power network by dissipating excessive reactive power present in the power network due to disturbances, for example, a fault in an AC line. The STATCOM/VSC 20 in the power control system 100 is able to rapidly contribute highly controllable voltage regulation during voltage dips. During fault recovery and switching phenomena, the STATCOM 20 has the ability to quickly provide the reactive power support to maintain the system voltage within the allowed limits, thereby the power quality concerns, to actively dampen harmonics in the power control system 100 and voltage fluctuations that produce annoying flickering effects for industrial and domestic consumers. The SC 40 characterized by a high rotating energy with high short circuit current generation capability, is used as a main contributor to boost system inertia. Characteristics response time of the SC 40 (that is relatively fast response for large disturbances and slower response for small signal control), together with its specific overload capacity make the SC 40 very suitable to play an important role in providing voltage support in severe dips and contributing to system frequency response. The power control system 100 combines the complementary operational characteristics of both the STATCOM 20 and the SC 40 to provide highly responsive voltage and frequency regulation. Thus, by sharing the same transformer 10 between the STATCOM 20 and the SC 40, a total cost of the power control system 100 is decreased. Further, by adding separate AC breakers on STATCOM and SC bus, high redundancy is achieved. For example, even if the STATCOM 20 needs to trip, the SC 40 can still stay in operation.

Further, a current source converter, CSC, such as an AC Chopper is typically used in weak/islanded networks to absorb excessive active power, when power transmission is temporarily disturbed, like for instance during a line fault. Since, the CSC uses its own transformer to connect to the AC network and the transformer is required to have a high voltage winding, a unit cost for the CSC is relatively high. Especially when considering that through its entire lifespan the CSC is almost never used, the transformer becomes an expensive and under-utilized high voltage transformer.

US 2010/171472 A1 discloses a static compensator system for providing reactive and/or active power to a power network. The system includes a static compensator, which has a DC capacitor U_{d} and a voltage source converter.

US 2005/015182 A1 discloses a power flow controller for controlling the flow of active and reactive power on an AC transmission line between an input and output. The power controller includes first and second power converters, coupled to each other to exchange active power and coupled to the input and output.

### SUMMARY

Consequently, there is a need for a cost-effective, redundant, and modular power control system for handling power imbalance in a power network that alleviates at least some of the above-cited problems.

It is therefore an object of the present disclosure to provide a power control system for controlling reactive power and/or active power in a power network, to mitigate, alleviate, or eliminate all or at least some of the above-discussed drawbacks of presently known solutions.

This and other objects are achieved by means of a power control system and a power compensator module as defined in the appended claims. The term exemplary is in the present context to be understood as serving as an instance, example or illustration.

According to a first aspect of the present disclosure, a power control system for controlling reactive power and/or active power in a power network is provided. The power control system is operatively coupled to the power network at a point of common coupling, PCC. The power control system comprises a transformer with at least three windings, in which a primary winding of the transformer being connected to an input from the power network. The power control system comprises a Voltage Source Converter, VSC, connected to a secondary winding of the transformer, wherein the VSC is configured to work as a source or a sink of reactive power in the power network. The power control system comprises a Current Source Converter, CSC, connected to a tertiary winding of the transformer and the CSC (30) is configured to handle power imbalance in the power network. Thus, a topology of the power control system creates a cost-effective, redundant, and modular station design, in which different functions such as the VSC and the CSC may relatively share a single transformer (that is an expensive high voltage transformer). Further, the topology of the power control system eliminates a requirement of a dedicated expensive high voltage transformer for the CSC to operate.

In some embodiments, the power control system further comprises a Synchronous Condenser, SC, connected to one of the tertiary winding or to a quaternary winding of the transformer, wherein the SC is configured to either generate or absorb the reactive power to adjust voltage in power network or to improve power factor in the power network, and to add inertia.

Advantageously, three different functions such as the VSC, the CSC, and the SC may share the relatively expensive high voltage transformer for controlling the reactive power and/or the active power in the power network caused due to disturbances such as faults in an AC grid, or the like. Thereby, power imbalance in the power network may be efficiently handled.

In addition, connecting the different functions such as the VSC, the CSC, and the SC to each winding of the same transformer achieves a cost reduction compared to implementing different dedicated transformers for each function.

In some embodiments, the SC is connected to the tertiary winding of the transformer in parallel with the CSC. Thus, the CSC and the SC may be connected to same winding of the transformer, which may achieve cost reduction.

In some embodiments, the CSC is configured to stay in operation even if the VSC or the SC trips because of any fault in the power network and wherein the VSC is configured to stay in operation even if the CSC or the SC trips because of any fault in the power network. Thereby, achieving high redundancy in operation of the power control system. Any of these converters or the SC is able to work independently no matter which of other units trip.

In some embodiments, the CSC is further configured to handle the power imbalance by absorbing excessive active power in the power network. Thus, the power control system disclosed herein with the CSC may be suitable for the power network used to evacuate power from an onshore weak/islanded AC network.

In some embodiments, the CSC is an Alternating Current, AC, chopper comprising a step-down transformer, a thyristor valve, and an energy dissipation resistor.

In other embodiments, the CSC is one of a Line Commutated Converter-High Voltage Direct Current, LCC-HVDC, or a Static VAR Compensator, SVC.

In some embodiments, the VSC is a Static Synchronous Compensator, STATCOM, which is a power electronic device comprising one or more of: force commutated semiconductor devices, an Insulated Gate Bipolar Transistor, IGBT, and a Gate turn-off thyristor, GTO.

In some embodiments, the SC is a direct current, DC-excited synchronous motor.

According to a second aspect of the present disclosure, a power compensator module is provided. The power compensator module comprises a transformer with at least three windings, wherein the transformer comprises a primary winding, a secondary winding, and a tertiary winding. The primary winding is connected to an input of the power compensator module in order to receive power from a power network that comprises the power compensator module. The secondary winding is connected to a Voltage Source Converter, VSC, that works as a source or a sink of a reactive power in the power network. The tertiary winding is connected to a Current Source Converter that handles an active power in the power network. The power compensator module is configured to control at least one of active power or reactive power in the power network that comprises the power compensation module.

In some embodiments, the transformer of the power compensator module further comprises a quaternary winding. One of the tertiary winding or the quaternary winding of the transformer is connected to a Synchronous Condenser, SC, (40) that either generates or absorbs the reactive power in order to adjust voltage in the power network, or to improve power factor in the power network, and to add inertia.

Therefore, different functions such as the VSC, the CSC, and the SC may share a relatively expensive high voltage transformer in the power compensator module. As a result, the power compensator module may be cost-effective module with high reliability and availability.

In some embodiments, any of the above aspects may additionally have features identical with or corresponding to any of the various features as explained above for any of the other aspects.

Advantage of some embodiments is that the power control system/power compensator module disclosed herein may be used for renewable energy integration, utilizing HVAC and/or HVDC transmission.

Other advantages may be readily apparent to one having skill in the art. Certain embodiments may have some, or all of the recited advantages.

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
- Fig. 1: discloses a circuit diagram of an example power control system comprising a Voltage Source Converter, VSC/Static Synchronous Compensator, STATCOM, and a Synchronous Condenser, SC, integrated on a single transformer according to the prior art;
- Fig. 2: discloses a circuit diagram of an example power control system according to some embodiments; and
- Figs. 3A, 3B, and 3C: disclose different topologies of an example power compensator module configured for controlling reactive power and/or active power in a power network according to some embodiments.

### DETAILED DESCRIPTION

Aspects of the present disclosure will be described more fully hereinafter with reference to the accompanying drawings. The apparatus and methods disclosed herein can, however, be realized in many different forms and should not be construed as being limited to the aspects set forth herein. Like numbers in the drawings refer to like elements throughout.

The terminology used herein is for the purpose of describing particular aspects of the disclosure only and is not intended to limit the invention. It should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

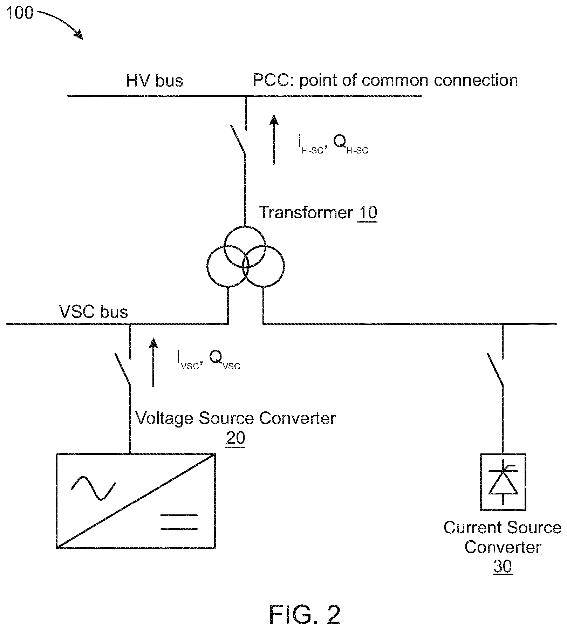

Fig. 2 discloses a circuit diagram of an example power control system for controlling reactive power and/or active power in a power network, according to some embodiments. The power control system 100 referred herein is operatively coupled to a power network. In some examples, the power network may be connected to renewable sources such as large windfarm, photovoltaic, PV, sources, or the like, for supporting high power onshore and offshore renewable energy transmissions.

One of the common requirements among the high power renewable energy transmissions is a need to absorb/dissipate excessive reactive power or active power present in the power network during disturbances such as faults in a line, grid, or the like. The excessive reactive power or active power may cause power imbalance in the power network.

In some examples, according to the prior art, Flexible Alternating Current Transmission System, FACTS, devices such as a Static Synchronous Compensator, STATCOM, a Static Var Compensator, SVC, or any other similar dynamic reactive power compensation devices can be used to absorb the reactive power, which further handles the power imbalance in the power network. In some examples, according to the prior art as disclosed in Fig. 1, the power control system is provided to absorb the reactive power during a fault in the power line of the power network, wherein the power control system comprises a STATCOM/Voltage Source Converter, VSC, and a Synchronous Condenser, SC, integrated on a single transformer. In some examples, according to the prior art, the power control system comprises a Current Source Converter for absorbing the active power to handle the power imbalance in the power network. However, a dedicated high voltage transformer is required for an operation of the Current Source Converter, CSC. If the CSC is almost never used in its lifespan, then the dedicated high voltage transformer becomes an expensive and under-utilized high voltage transformer.

Therefore, according to embodiments herein, a cost-effective, redundant, and modular power control system 100 is provided for handling power imbalance in the power network. The power control system 100 is operatively coupled to the power network at a point of common coupling, PCC.

As depicted in Fig. 2, the power control system 100 comprises a transformer 10, a VSC 20, and CSC 30.

In some examples, the transformer 10 referred herein may be a high voltage transformer. The transformer 10 comprises at least three windings. Among the at least three windings of the transformer 10, a primary winding of the transformer 10 is connected to an input from the power network at the PCC.

In some examples, the VSC 20 referred herein may be a STATCOM. The STATCOM may be a power electronic device, which comprises one or more of: force commutated semiconductor devices, an Insulated Gate Bipolar Transistor, IGBT, and a Gate turn-off thyristor, GTO.

The VSC 20 is connected to a secondary winding of the transformer 10. The VSC 20 is configured to work as a source or a sink of reactive power in the power network. Thus, the VSC 20 may handle power imbalance in the power network by generating or absorbing the reactive power present in the power network.

The CSC 30 is connected to a tertiary winding of the transformer 10. The CSC 30 is configured to handle power imbalance in the power network. The CSC 30 may handle the power imbalance in the power network by absorbing excessive active power in the power network.

Therefore, different functions such as the VSC 20 and the CSC 30 may share a relatively expensive high voltage transformer 10 for controlling the reactive power and/or active power present in the power network due to disturbances such as fault in the AC line, an inverter AC grid, or the like. As the VSC 20 and the CSC 30 share the single transformer 10, a need for a dedicated transformer for the VSC 20 and the CSC 30 may be eliminated. As a result, a cost of the power control system 100 may be reduced and high redundancy may be achieved.

In some embodiments, the power control system 100 may further comprise a Synchronous Condenser, SC, (40), (not shown in Fig. 2). The SC may be connected to one of the tertiary winding or to a quaternary winding of the transformer 10. The SC may be configured to either generate or absorb the reactive power to adjust voltage in the power network, or to improve power factor in the power network, and to add inertia.

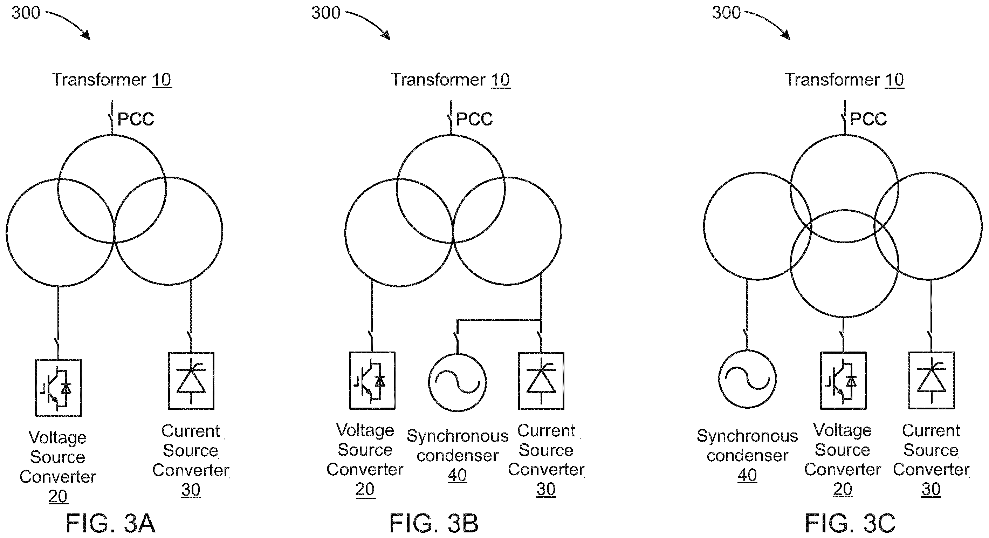

In some embodiments, the power control system 100 may act as a power compensation module. Various topologies of the power compensator module are explained in conjunction with Figs. 3A, 3B, and 3C.

Figs. 3A, 3B, and 3C disclose different topologies of an example power compensator module 300 configured for controlling reactive power and/or active power in a power network. In some embodiments, the power control system disclosed in Fig. 2 may act as the power compensator module 300. The power compensator module 300 is configured to control at least one of active power or reactive power in the power network that comprises the power compensator module 300. Sudden active power or reactive power imbalances may occur in the power network due to disturbances such as fault in an AC line, AC grid, or the like.

In some embodiments, as depicted in Fig. 3A, the power compensator module 300 comprises the transformer 10. The transformer 10 comprises three windings, a primary winding, a secondary winding, and a tertiary winding.

The primary winding is connected to an input of the power compensator module 300 in order to receive power from the power network. In some examples, the input may be a PCC in the power network. In embodiments disclosed herein, the primary winding of the transformer 10 may be referred as a PCC winding and other windings of the transformer 10 may be referred as non-PCC windings.

The secondary winding of the transformer 10 is connected to the VSC 20. The VSC 20 works as a source or a sink of a reactive power in the power network. In some examples, the VSC 20 may include a STATCOM. The STATCOM may be a power electronic device, which comprises one or more of: force commutated semiconductor devices, an Insulated Gate Bipolar Transistor, IGBT, and a Gate turn-off thyristor, GTO.

The tertiary winding of the transformer 10 is connected to the CSC 30. The CSC 30 handles an active power in the power network. The CSC 30 may handle the power imbalance by absorbing excessive active power in the power network. In some examples, the CSC 30 may include an Alternating Current, AC, chopper that comprises a step-down transformer, a thyristor valve, and an energy dissipation resistor. In other examples, the CSC 30 may include a Line Commutated Converter-High Voltage Direct Current, LCC-HVDC, or a Static VAR Compensator, SVC.

In some embodiments, as depicted in Fig. 3B, the tertiary winding of the transformer 10 may be connected to the SC 40, which is arranged in parallel with the CSC 30. Advantageously, connecting the SC 40 and the CSC 30 to the same winding of the transformer 10 achieves a cost reduction compared to connecting the SC 40 and the CSC 30 individually to separate windings of the transformer 10.

The SC 40 may either generate or absorb the reactive power in order to adjust voltage in the power network or to improve power factor in the power network. In some examples, the SC 40 may be a DC-excited synchronous motor/synchronous condenser, SC. The SC is a rotating mechanical mass.

In some embodiments, any of the VSC 20, CSC 30, or the SC 40 may be configured to stay in operation even if any of the other device trips because of any fault in the power network. Vice versa is also true.

In some embodiments, as disclosed in Fig. 3C, the power compensator module 300 comprises the transformer 10 with four windings, a primary winding, a secondary winding, a tertiary winding, and a quaternary winding. In some examples, voltage levels of three non-PCC windings such as the secondary, tertiary, and quaternary windings may be designed freely according to their respectively functional design requirements. In other examples, number of turns or turn ratio of three non-PCC windings such as the secondary, tertiary, and quaternary windings may be designed freely according to their respectively functional design requirements.

The primary winding of the transformer 10 is connected to the input of the power compensator module 300 (i.e., at a PCC) in order to receive power from the power network that comprises the power compensator module 300.

The secondary winding of the transformer 10 is connected to the VSC 20 that works as the source or the sink of the reactive power in the power network.

The tertiary winding and quaternary winding of the transformer 10 may be connected to the CSC 30 and the SC 40, respectively. The CSC 30 is configured to handle power imbalance in the power network by absorbing the active power in the power network. The SC 40 is configured to either generate or absorb the reactive power to adjust voltage in the power network or to improve power factor in the power network, and to add inertia.

In some embodiments, any of the VSC 20, CSC 30, or the SC 40 may be configured to stay in operation even if any of the other device among these is tripped because of any fault in the power network. Vice versa is also true.

Thus, the power compensator module 300 disclosed herein may be a cost-effective modular design with high reliability and availability, as various functions such as the VSC 20, the CSC 30 and optionally the SC 40 share the single high voltage transformer 10 for controlling the reactive power and/or active power in the power network. As a result, power imbalance or voltage may be adjusted efficiently in the power network.

In addition, the power compensator module 300 may be used for renewable energy integration with HVAC and/or HVDC transmission.

The foregoing description of the specific embodiments will so fully reveal the general nature of the embodiments herein that others can, by applying current knowledge, readily modify and/or adapt for various applications such specific embodiments without departing from the scope of the claims. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the scope of the claims.

## Claims

1. A power control system (100) configured for controlling reactive power and/or active power in a power network, the power control system (100) being operatively coupled to the power network at a point of common coupling, PCC, the power control system (100) comprising:
a transformer (10) with at least three windings, in which a primary winding of the transformer (10) being connected to an input from the power network;
at least one Voltage Source Converter, VSC, (20) being connected to a secondary winding of the transformer (10), wherein the VSC (20) is configured to work as a source or a sink of reactive power in the power network; and is **characterised by** comprising
at least one Current Source Converter, CSC, (30) being connected to a tertiary winding of the transformer (10), wherein the CSC (30) is configured to handle power imbalance by absorbing excessive active power in the power network.

2. The power control system (100) according to claim 1, further comprising
at least one Synchronous Condenser, SC, (40) connected to one of the tertiary winding or to a quaternary winding of the transformer (10), wherein the SC (40) is configured to provide dynamic reactive power to improve power factor in the power network, and to add inertia.

3. The power control system (100) according to claim 2, wherein the SC (40) is connected to the tertiary winding of the transformer (10) in parallel with the CSC (30).

4. The power control system (100) according to any of the preceding claims, wherein the CSC (30) is an Alternating Current, AC, chopper comprising a step-down transformer, a thyristor valve, and an energy dissipation resistor.

5. The power control system (100) according to any of the claims 1-3, wherein the CSC (30) is one of a Line Commutated Converter-High Voltage Direct Current, LCC-HVDC, or a Static VAR Compensator, SVC.

6. The power control system (100) according to any of the preceding claims, wherein the VSC (20) is a Static Synchronous Compensator, STATCOM which is a power electronic device comprising one or more of: force commutated semiconductor devices, an Insulated Gate Bipolar Transistor, IGBT and a Gate turn-off thyristor, GTO.

7. The power control system (100) according to any of the claims 2-6, wherein the SC (40) is a Direct Current, DC-excited synchronous motor.

8. A power compensator module (300), comprising:
a transformer (10) with at least three windings, wherein the transformer (10) comprises:
a primary winding of the transformer (10) being connected to an input of the power compensator module (300) in order to receive power from a power network that comprises the power compensator module (300);
a secondary winding of the transformer (10) being connected to a Voltage Source Converter, VSC, (20) that works as a source or a sink of reactive power in the power network, and is **characterised by** comprising
a tertiary winding of the transformer (10) being connected to a Current Source Converter, CSC, (30) that handles power imbalance by absorbing excessive active power in the power network, and
wherein the power compensator module (300) is configured to control at least one of active power or reactive power in the power network that comprises the power compensator module (300).

9. The power compensator module (300) according to claim 8, further comprising a quaternary winding of the transformer (10), wherein one of the tertiary winding or the quaternary winding of the transformer (10) is connected to Synchronous Condenser, SC, (40), that provides dynamic reactive power to improve power factor in the power network , and to add inertia.

10. The power compensator module (300) according to claim 9, wherein the SC (40) is connected to the tertiary winding of the transformer (10) in parallel with the CSC (30).

11. The power compensator module (300) according to any of the claims 8-10, wherein the CSC (30) is an Alternating Current, AC, chopper comprising a step-down transformer, a thyristor valve, and an energy dissipation resistor.

12. The power compensator module (300) according to any of the claims 8-10, wherein the CSC is one of a Line Commutated Converter-High Voltage Direct Current, LCC-HVDC, or a Static VAR Compensator, SVC.

13. The power compensator module (300) according to any of the claims 8-12, wherein the VSC (20) is a Static Synchronous Compensator, STATCOM, which is a power electronic device comprising one or more of force commutated semiconductor devices, Insulated Gate Bipolar Transistor, IGBT, Gate turn-off thyristor, GTO.

14. The power compensator module (300) according the any of the claims 9-13, wherein the SC (40) is a Direct Current, DC-excited synchronous motor.

## Patentansprüche

1. Leistungssteuerungssystem (100), das zum Steuern von reaktivem Strom und/oder aktivem Strom in einem Stromnetz konfiguriert ist, wobei das Leistungssteuerungssystem (100) an einem Verknüpfungspunkt, PCC, an das Stromnetz wirkgekoppelt ist, wobei das Leistungssteuerungssystem (100) Folgendes umfasst:
einen Transformator (10) mit mindestens drei Wicklungen, wobei eine Primärwicklung des Transformators (10) mit einem Eingang von dem Stromnetz verbunden ist;
mindestens einen Spannungsquellenumrichter, VSC, (20), der mit einer Sekundärwicklung des Transformators (10) verbunden ist, wobei der VSC (20) dazu konfiguriert ist, als eine Quelle oder eine Senke von reaktivem Strom in dem Stromnetz zu dienen; und **dadurch gekennzeichnet ist, dass** er Folgendes umfasst:
mindestens einen Stromquellenumrichter, CSC, (30), der mit einer Tertiärwicklung des Transformators (10) verbunden ist, wobei der CSC (30) dazu konfiguriert ist, Stromungleichgewichte handzuhaben, indem überschüssiger aktiver Strom in dem Stromnetz absorbiert wird.

2. Leistungssteuerungssystem (100) nach Anspruch 1, ferner umfassend:
mindestens einen Synchronkondensator, SC, (40), der mit einer der Tertiärwicklung oder einer Quartärwicklung des Transformators (10) verbunden ist, wobei der SC (40) dazu konfiguriert ist, dynamischen reaktiven Strom bereitzustellen, um den Leistungsfaktor in dem Stromnetz zu verbessern und Trägheit hinzuzufügen.

3. Leistungssteuerungssystem (100) nach Anspruch 2, wobei der SC (40) parallel zu dem CSC (30) mit der Tertiärwicklung des Transformators (10) verbunden ist.

4. Leistungssteuerungssystem (100) nach einem der vorhergehenden Ansprüche, wobei der CSC (30) ein Wechselstromsteller, AC-Steller, ist, der einen Abwärtstransformator, ein Thyristorventil und einen energieableitenden Widerstand umfasst.

5. Leistungssteuerungssystem (100) nach einem der Ansprüche 1-3, wobei der CSC (30) eines von einem netzgeführten Umrichter für Hochspannungs-Gleichstrom, LCC-HVDC, oder einem statischen Blindleistungskompensator, SVC, ist.

6. Leistungssteuerungssystem (100) nach einem der vorhergehenden Ansprüche, wobei der VSC (20) ein statischer Synchronkompensator, STATCOM, ist, der eine Leistungselektronikvorrichtung ist, die eines oder mehrere der Folgenden umfasst: zwangskommutierte Halbleitervorrichtungen, einen Bipolartransistor mit isolierter Gate-Elektrode, IGBT, und einen vom Gate her abschaltbaren Thyristor, GTO.

7. Leistungssteuerungssystem (100) nach einem der Ansprüche 2-6, wobei der SC (40) ein durch Gleichstrom, DC, angeregter Synchronmotor ist.

8. Leistungskompensatormodul (300), umfassend:
einen Transformator (10) mit mindestens drei Wicklungen, wobei der Transformator (10) Folgendes umfasst:
eine Primärwicklung des Transformators (10), die mit einem Eingang des Leistungskompensatormoduls (300) verbunden ist, um Strom aus einem Stromnetz aufzunehmen, welches das Leistungskompensatormodul (300) umfasst;
eine Sekundärwicklung des Transformators (10), die mit einem Spannungsquellenumrichter, VSC, (20) verbunden ist, der als eine Quelle oder eine Senke von reaktivem Strom in dem Stromnetz dient und **dadurch gekennzeichnet ist, dass** er Folgendes umfasst:
eine Tertiärwicklung des Transformators (10), die mit einem Stromquellenumrichter, CSC, (30) verbunden ist, der Stromungleichgewichte handhabt, indem überschüssiger aktiver Strom in dem Stromnetz absorbiert wird, und
wobei das Leistungskompensatormodul (300) dazu konfiguriert ist, mindestens eines von aktivem Strom oder reaktivem Strom in dem Stromnetz, welches das Leistungskompensatormodul (300) umfasst, zu steuern.

9. Leistungskompensatormodul (300) nach Anspruch 8, ferner umfassend eine Quartärwicklung des Transformators (10), wobei eine der Tertiärwicklung oder der Quartärwicklung des Transformators (10) mit einem Synchronkondensator, SC, (40) verbunden ist, der dynamischen reaktiven Strom bereitstellt, um den Leistungsfaktor in dem Stromnetz zu verbessern und Trägheit hinzuzufügen.

10. Leistungskompensatormodul (300) nach Anspruch 9, wobei der SC (40) parallel zu dem CSC (30) mit der Tertiärwicklung des Transformators (10) verbunden ist.

11. Leistungskompensatormodul (300) nach einem der Ansprüche 8-10, wobei der CSC (30) ein Wechselstromsteller, AC-Steller, ist, der einen Abwärtstransformator, ein Thyristorventil und einen energieableitenden Widerstand umfasst.

12. Leistungskompensatormodul (300) nach einem der Ansprüche 8-10, wobei der CSC eines von einem netzgeführten Umrichter für Hochspannungs-Gleichstrom, LCC-HVDC, oder einem statischen Blindleistungskompensator, SVC, ist.

13. Leistungskompensatormodul (300) nach einem der Ansprüche 8-12, wobei der VSC (20) ein statischer Synchronkompensator, STATCOM, ist, der eine Leistungselektronikvorrichtung ist, die eine oder mehrere zwangskommutierte Halbleitervorrichtungen, einen Bipolartransistor mit isolierter Gate-Elektrode, IGBT, und einen vom Gate her abschaltbaren Thyristor, GTO, umfasst.

14. Leistungskompensatormodul (300) nach einem der Ansprüche 9-13, wobei der SC (40) ein durch Gleichstrom, DC, angeregter Synchronmotor ist.

## Revendications

1. Système de contrôle de puissance (100) configuré pour contrôler la puissance réactive et/ou la puissance active dans un réseau électrique, le système de contrôle de puissance (100) étant couplé fonctionnellement au réseau électrique en un point de couplage commun, PCC, le système de contrôle de puissance (100) comprenant :
un transformateur (10) avec au moins trois enroulements, dans lequel un enroulement primaire du transformateur (10) est connecté à une entrée du réseau électrique ;
au moins un convertisseur de source de tension, VSC, (20) étant connecté à un enroulement secondaire du transformateur (10), le VSC (20) étant configuré pour fonctionner comme une source ou
un puits de puissance réactive dans le réseau électrique ; et est **caractérisé en ce qu'**il comprend
au moins un convertisseur de source de courant, CSC, (30) étant connecté à un enroulement tertiaire du transformateur (10), le CSC (30) étant configuré pour gérer le déséquilibre de puissance en absorbant la puissance active excessive dans le réseau électrique.

2. Système de contrôle de puissance (100) selon la revendication 1, comprenant en outre
au moins un condensateur synchrone, SC, (40) connecté à l'un parmi l'enroulement tertiaire ou un enroulement quaternaire du transformateur (10), dans lequel le SC (40) est configuré pour fournir une puissance réactive dynamique afin d'améliorer le facteur de puissance dans le réseau électrique et d'ajouter de l'inertie.

3. Système de contrôle de puissance (100) selon la revendication 2, dans lequel le SC (40) est connecté à l'enroulement tertiaire du transformateur (10) en parallèle avec le CSC (30).

4. Système de contrôle de puissance (100) selon l'une quelconque des revendications précédentes, dans lequel le CSC (30) est un hacheur à courant alternatif, CA, comprenant un transformateur abaisseur, une valve à thyristor et une résistance de dissipation d'énergie.

5. Système de contrôle de puissance (100) selon l'une quelconque des revendications 1 à 3, dans lequel le CSC (30) est l'un d'un convertisseur à commutation de ligne à courant continu haute tension, LCC-HVDC, ou d'un compensateur VAR statique, SVC.

6. Système de contrôle de puissance (100) selon l'une quelconque des revendications précédentes, dans lequel le VSC (20) est un compensateur synchrone statique, STATCOM, qui est un dispositif électronique de puissance comprenant un ou plusieurs éléments parmi : des dispositifs semi-conducteurs à commutation de force, un transistor bipolaire à grille isolée, IGBT et un thyristor à coupure de grille, GTO.

7. Système de contrôle de puissance (100) selon l'une quelconque des revendications 2 à 6, dans lequel le SC (40) est un moteur synchrone à courant continu et à excitation CC.

8. Module compensateur de puissance (300), comprenant :
un transformateur (10) comportant au moins trois enroulements, le transformateur (10) comprenant :
un enroulement primaire du transformateur (10) étant connecté à une entrée du module compensateur de puissance (300) afin de recevoir de l'énergie d'un réseau électrique qui comprend le module compensateur de puissance (300) ;
un enroulement secondaire du transformateur (10) étant connecté à un convertisseur de source de tension, VSC, (20) qui fonctionne comme une source ou un puits de puissance réactive dans le réseau électrique, et est **caractérisé en ce qu'**il comprend
un enroulement tertiaire du transformateur (10) connecté à un convertisseur de source de courant, CSC, (30) qui gère le déséquilibre de puissance en absorbant la puissance active excessive dans le réseau électrique, et
dans lequel le module compensateur de puissance (300) est configuré pour contrôler au moins l'une de la puissance active ou de la puissance réactive dans le réseau électrique qui comprend le module compensateur de puissance (300).

9. Module compensateur de puissance (300) selon la revendication 8, comprenant en outre un enroulement quaternaire du transformateur (10), dans lequel l'un de l'enroulement tertiaire ou de l'enroulement quaternaire du transformateur (10) est connecté au condensateur synchrone, SC, (40), qui fournit une puissance réactive dynamique pour améliorer le facteur de puissance dans le réseau électrique, et pour ajouter de l'inertie.

10. Module compensateur de puissance (300) selon la revendication 9, dans lequel le SC (40) est connecté à l'enroulement tertiaire du transformateur (10) en parallèle avec le CSC (30).

11. Module compensateur de puissance (300) selon l'une quelconque des revendications 8 à 10, dans lequel le CSC (30) est un hacheur à courant alternatif, CA, comprenant un transformateur abaisseur, une valve à thyristor et une résistance de dissipation d'énergie.

12. Module compensateur de puissance (300) selon l'une quelconque des revendications 8 à 10, dans lequel le CSC est l'un d'un convertisseur à commutation de ligne à courant continu haute tension, LCC-HVDC, ou d'un compensateur VAR statique, SVC.

13. Module compensateur de puissance (300) selon l'une quelconque des revendications 8 à 12, dans lequel le VSC (20) est un compensateur synchrone statique, STATCOM, qui est un dispositif électronique de puissance comprenant un ou plusieurs dispositifs semi-conducteurs à commutation de force, un transistor bipolaire à grille isolée, IGBT, un thyristor à coupure de grille, GTO.

14. Module compensateur de puissance (300) selon l'une quelconque des revendications 9 à 13, dans lequel le SC (40) est un moteur synchrone fonctionnant à courant continu CC.
